# EUROPEAN PATENT APPLICATION

(11) **EP 1 544 936 A1**
(43) Date of publication of application: **22.06.2005**
(21) Application number: 03798409.3
(22) Date of filing: 17.09.2003
(51) Int. Cl.: H01M 10/42

(54) **DEVICE FOR REMOVING LEAD SULFATE FILM FORMED IN LEAD-ACID BATTERY**

(30) Priority: 24.09.2002 JP 2002315069
(71) Applicant: Eruma Co. Ltd., Naha-shi, Okinawa 900-0004 (JP)
(72) Inventor: OKUNO, Shigeo, Nagoya-shi, Aichi 466-0016 (JP)
(74) Representative: Rees, Alexander Ellison
(86) International application number: PCT/JP2003/011838
(87) International publication number: WO 2004/030137

(57) **Abstract**

This invention seeks to provide a novel device for removing membranous lead sulfate deposited on electrodes of a lead-acid battery by dissolving the lead sulfate into fine particles without causing the membranous lead sulfate to fall off or be suspended in the electrolytic solution, thus to recover the performance of the battery in a deteriorated state and prolong the battery life. This invention further seeks to provide a novel device for removing membranous lead sulfate deposit on the electrodes, which can emit little noise to the outside environment

To attain the objects as noted above according to the present invention, there is provided a device for removing membranous lead sulfate deposited on electrodes of the lead-acid battery due to sulfation by using a phenomenon bringing about a conductor skin effect of intensively dissolving the surface layer of the membranous lead sulfate deposited on the electrodes with the pulse current having a short pulse width, which device is attached to a lead-acid battery and provided with a voltage detector, reference voltage generator, voltage comparator, oscillator, amplifier, waveform shaping circuit, negative pulse generator, and electrifying indicator. The pulse width of the pulse current is preferably 1 µs or less.

## Description

### TECHNICAL FIELD

This invention relates to a device for removing membranous lead sulfate (PbSO₄) formed on electrodes of a lead-acid battery due to sulfation.

### BACKGROUND ART

Sulfation has so far remained a significant problem in a lead-acid battery. The sulfation is a phenomenon in which lead sulfate (PbSO₄), which is formed by a discharge of a lead-acid battery, precipitates on polar plates of the battery because of vibration or fluctuation of discharging condition or an ambient temperature at which the battery is left to stand, consequently to develop to a nonconducting film layer. This phenomenon may possibly cause increase in internal resistance leading to performance deterioration of the battery or inability to use.

In order to curb the growth of the aforementioned lead sulfate formed in a film or membrane, the discharging conditions, temperature, vibration and other factors must be controlled with the greatest possible care. However, it is nearly impossible to have a user consistently render attention to the operative conditions of the battery. Thus, there has been a great need for a device capable of reestablishing the function of the lead-acid battery by removing the membranous lead sulfate deposited on the polar plates.

There has been conventionally known a device for removing the membranous lead sulfate by applying a pulse current to the battery to generate electroconvulsive shock between the polar plate and the membranous lead sulfate deposited on the polar plate.

As one example of the conventional devices of this kind, a battery activating device, which incorporates a circuit for generating a pulse current for exfoliating lead sulfate deposited on the polar plates of the lead-acid battery, is disclosed in Japanese Patent Application Publication No. 2000-156247(A).

Also in Japanese Patent Application Publication No. 2000-323188(A), there is disclosed a conventional lead-acid battery activating method featured in that a charging pulse current having larger electric quantity than a discharging pulse current is given immediately after applying the discharging pulse current. In this publication, there is a disclosure that the electric quantity of the discharging pulse current is over 0.1 C and the pulse width thereof is 0.0001 sec. to 1 sec.

The other analogous arts are disclosed in Japanese Patent No. 3079212 and Japanese Patent Application Publication No. 2000-40537(A).

The conventional arts thus disclosed all have a mere function of physically exfoliating the membranous lead sulfate from the polar plate, thus to temporarily renovate the lead-acid battery. That is, such a mere measure of physically exfoliating the membranous lead sulfate has a fundamental problem such that lead sulfate flakes exfoliating away in consequence of applying the pulse current fall onto the peripheries of the lower parts of the polar plates or are suspended without dissolving in electrolytic solution in the battery, consequently to be again deposited to the polar plates of the battery during discharging.

Besides, because the exfoliated lead sulfate flakes do not quickly dissolve in the electrolytic solution, thus to keep the specific gravity of the electrolytic solution low, the battery suffers from the disadvantage of being irrecoverable to the normal value. To bring the specific gravity of the electrolytic solution back to the normal value, dilute sulfuric acid must be supplied into the battery.

The conventional devices have a further disadvantage in that the exfoliated lead sulfate flakes sunk onto the peripheries of the lower parts of the polar plates are gradually dissolved into the electrolytic solution after supplying the dilute sulfuric acid into the battery, consequently to elevate the specific gravity of the electrolytic solution in excess, resulting in damaging the polar plates to decrease the life of lead-acid battery.

Furthermore, there are disadvantageous cases in the polar plate getting thinner are sometimes exfoliated along with the falling lead sulfate flakes, consequently to decrease the surface area of the polar plate producing a chemical reaction, with the result of which sufficient electric power required in use cannot be outputted from the battery. There is one other problem in which the pulse current applied for removing the lead sulfate inevitably emits noise to the outside environment

In the light of the foregoing problems brought about by the conventional arts, the present invention seeks to provide a novel device capable of removing membranous lead sulfate deposited on electrodes of a lead-acid battery by dissolving the membranous lead sulfate on the electrodes into fine particles without causing the membranous lead sulfate to fall off or be suspended in the electrolytic solution, so that the performance of the battery can be recovered to prolong the battery life.

The present invention further seeks to provide a novel device capable of removing membranous lead sulfate without damaging the electrodes and emitting noise to the outside environment.

### DISCLOSURE OF THE INVENTION

To attain the objects as described above according to the present invention, there is provided a device for removing membranous lead sulfate deposited on electrodes of the lead-acid battery due to sulfation by using a phenomenon bringing about a conductor skin effect of intensively dissolving the surface layer of the membranous lead sulfate deposited on the electrodes with the pulse current having a short pulse width, which device is attached to a lead-acid battery and provided with a voltage detector, reference voltage generator, voltage comparator, oscillator, amplifier, waveform shaping circuit, negative pulse generator, and electrifying indicator.

### BRIEF DESCRIPTION OF THE DRAWINGS

FIG 1 is a circuit diagram of a device for removing membranous lead sulfate according to the present invention.
FIG 2 is a waveform diagram showing currents at the points of A, B and C in FIG 1.
FIG 3 is an illustration showing one practical example of the device of the invention in use.
FIG 4 is an illustration showing another practical example of the device of the invention in use.
FIG 5 is a graph showing the results of performance measurements of the device in Embodiment 1 of the invention.

### BEST MODE FOR CARRYING OUT AN INVENTION

To resolve common issues suffered from the conventional methods as described above, the present invention provides a device for removing lead sulfate deposited in a film or membrane on electrodes of the lead-acid battery due to sulfation. The device of the invention is mounted to a lead-acid battery and provided with a voltage detector, reference voltage generator, voltage comparator, oscillator, amplifier, waveform shaping circuit, negative pulse generator, and electrifying indicator. The device of the invention is featured by the use of a phenomenon bringing about a conductor skin effect of intensively dissolving the surface layer of the membranous lead sulfate deposited on the electrodes of the battery with the pulse current having a short pulse width.

According to the invention noted above, the lead sulfate formed in a film or membrane on the electrode of the lead-acid battery is sequentially dissolved into lead ion and sulfate ion as the result of concentration of electrical charge into the surface layer (skin depth) of the lead sulfate, which is caused by applying a pulse current having a pulse width which is so short as to give rise to a conductor superficial effect (skin effect) on the electrode with the membranous lead sulfate.

The device for removing membranous lead sulfate deposited on the electrodes of the lead-acid battery according to the invention is further featured by using the pulse current with a pulse width of less than 1 µs.

According to the device noted above, the pulse width of the pulse current to be applied to the electrodes can be made appropriate so as to effectively dissolve only the surface layer part of the membranous lead sulfate in membrane on the electrodes without damaging the electrodes. Furthermore, because the pulse current applied to the device of the invention is very faint in intensity, no noise is emitted to the outside environment.

The device of the invention is further featured by making use of the electricity generated by the lead-acid battery as a power source for removing the membranous lead sulfate deposited on the electrodes of the battery.

According to the device using the electricity generated by the lead-acid battery as the power source for removing the membranous lead sulfate in itself, deposition of the lead sulfate onto the electrode can be effectively prevented.

The present invention will be described in detail hereinafter.

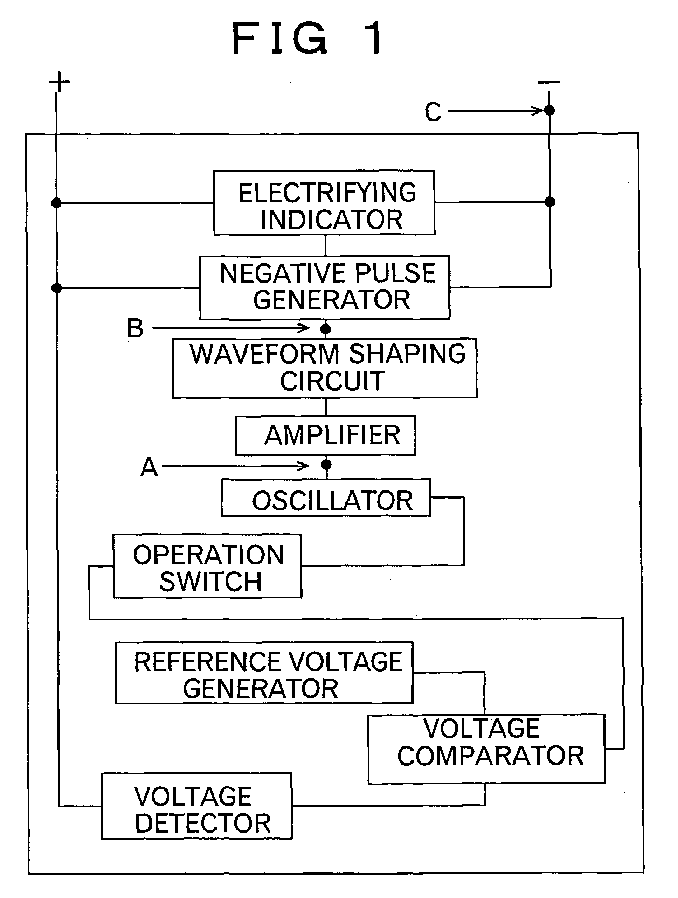

One embodiment of the circuitry of the device for removing the membranous lead sulfate according to the invention is shown in FIG 1. The device of FIG 1 comprises a voltage detector, reference voltage generator, voltage comparator, operation/nonoperation switch, oscillator, amplifier, waveform shaping circuit, negative pulse generator, and electrifying indicator. The operation/nonoperation switch serves to switching on or off the device and therefore is not indispensable for the device of the invention.

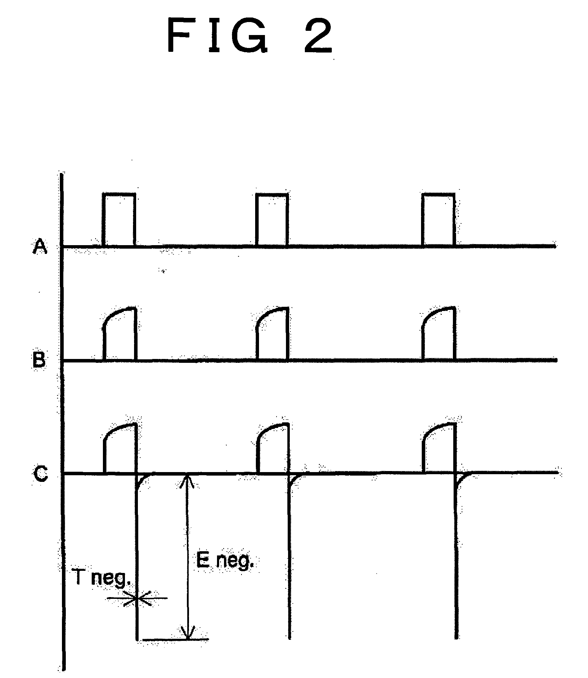

In FIG 2, the waveforms at the points A, B and C in FIG 1 are illustrated. In the device, a negative pulse current with a pulse width, which is so short as to give rise to the conductor skin effect, is brought about at the point C and applied to the lead-acid battery, consequently to dissolve the membranous lead sulfate deposited on the electrode into fine particles.

The conductor skin effect herein is a phenomenon in which the high-frequency current is localized in the surface layer of a conductor and does not penetrate deep into the conductor. With the conductor skin effect, the electrical charge is concentrated in the skin depth defined by the pulse width, so that the surface layer of the membranous lead sulfate can be sequentially dissolved into fine particles. Particularly, the lead sulfate is dissolved in order from the pointed tips of crystallized protuberances thereof.

Hence, unlike the conventional devices of this type, the device of the invention can prevent the lead sulfate deposit on the electrode from exfoliating or falling off in clusters and suspending the lead sulfate dissolved in fine particles in an electrolytic solution of the battery, remaining the crystallized state.

The pulse current with a pulse width, which is so short as to give rise to the conductor skin effect, is very faint in intensity, and therefore, does not damage to the electrodes. Besides, the device of the invention has an advantage of producing little noise, thus not to affect the outside environment adversely.

Furthermore, the device has a function of suppressing generation of Joule heat, thus to preventing the electrodes from deforming and the battery from drying due to heat.

The pulse width of the pulse current outputted from the device may be determined in a range capable of bringing about the conductor skin effect. To be more specific, the pulse width may preferably be of less than 1 µs, particularly, in the range of 0.1 µs to 1 µs. The surface thickness calculated with the pulse width in the range specified herein is to come to the order of 0.01 mm, so that the electrical charge can be concentrated on the surface part without permitting the electrical charge to penetrate into the inside of the membranous lead sulfate deposit.

The pulse current with a pulse width of over 1 µs is ineligible because it causes thermal oscillation in a boundary face between the membranous lead sulfate deposit and the electrode, consequently to permit the lead sulfate deposit on the electrodes to exfoliate and fall off.

With increase of pulse number of the pulse current to be applied, a rate of dissolving the membranous lead sulfate deposited on the electrodes is increased, but there is a case where heat is generated. Hence, this condition must be taken into account to determine the pulse number. Concretely speaking, it is preferable to determine the pulse number of the pulse current to be the order of 8000 to 12000 per second.

The pulse current with excessively small voltage and current values makes it impossible to dissolve the membranous lead sulfate. Inversely, the pulse current with excessively large voltage and current values generates heat bringing about an adverse affect. Hence, this condition must be taken into account to determine the voltage and current values of the pulse current to be applied. To be more specific, it is preferable to determine the voltage and current values to be in the ranges of 12 to 108 volts and 10 to 120 mA. However, the optimum values, which depend on the pulse width and pulse number, should not be understood as limitative.

The power source for the device shown in FIG 1 may be replaced with an external power supply, but it is desirable to use the lead-acid battery in itself to which the device of the invention is attached. Constant use of very small electric current generated by the lead-acid battery can effectively prevent the lead sulfate from being deposited onto the electrode of the battery.

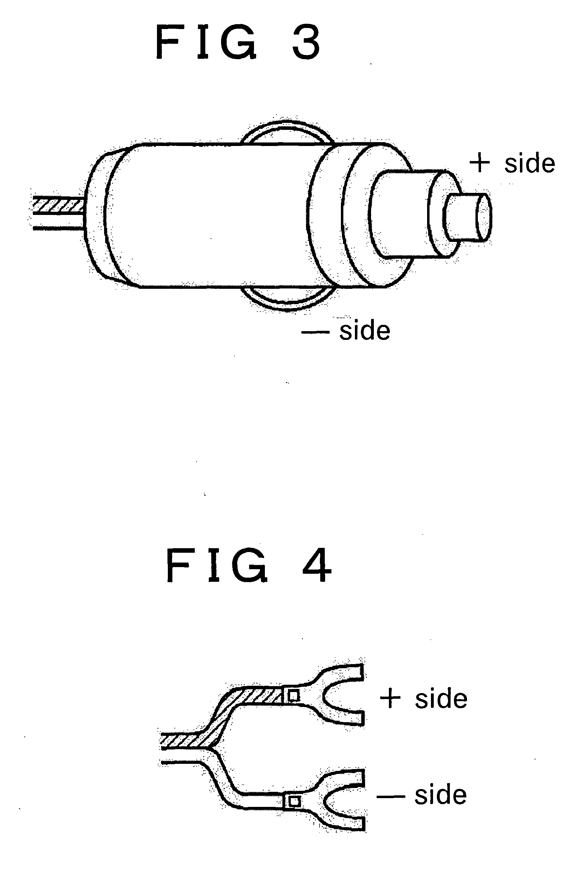

The device mentioned above can be mounted on the lead-acid battery by being merely connected to the battery or in the other manner selected properly. As one example in a passenger car, bus or truck, a cigarette lighter's socket can be used as illustrated in FIG 3. Alternatively, terminals shown in FIG 4. may be brought in direct connection to the lead-acid battery by use of screws.

It is desirable to charge the lead-acid battery while or after applying the pulse current to the battery. By charging the battery, lead ion being resoluble by the pulse current resolves itself to recover as an electrode of lead or lead dioxide. As a result, the specific gravity of the electrolytic solution of the battery turns back to its original optimum value, thus to swiftly recover the performance of the battery. This function of effectively removing the lead sulfate from the electrodes of the lead-acid battery could be eventually achieved by the present invention enabling the surface part of the membranous lead sulfate to be dissolved into fine particles, but cannot be materialized by any conventional removing method using electric shock for exfoliating the lead sulfate from the electrodes because the crystallized lead sulfate fragments exfoliated by the electric shock are again deposited onto the electrodes even by charging the battery.

In the case of charging the battery while applying the pulse current, the membranous lead sulfate deposit on the electrodes are constantly dissolved and resolved, thus to suppress growth of the sulfation, with the result of which the performance of the lead-acid battery can be maintained over a long period of time.

It is effective to repeatedly perform a course of processes of applying the pulse current to the lead-acid battery having the electrodes onto which the lead sulfate is deposited to degrade the performance of the battery and then charging the lead-acid battery. Consequently, the lead sulfate deposited on the electrode resolves from the surface layer part thereof to turn into a sponge-like state, thus to increase the specific gravity of the electrolytic solution in proportion to the time of applying the pulse current, so that the performance of the lead-acid battery can be restored to its original state.

The device for moving the membranous lead sulfate deposit according to the present invention is applicable to various kinds of lead-acid batteries. For instance, the device of the invention may suitably be used for passenger motor cars, motor tracks, buses, yachts, motor boats, fish boats, ships, farm machineries and implements, construction tools and machines, fork lift trucks, electric carts, road sweepers, electric wheelchairs, and backup power supplying systems for hospitals, police stations and fire stations, but the present invention does not contemplate imposing any limitation on applications and uses.

Hereinafter, the present invention will be further described in connection with an embodiment

A lead-acid battery with a dedicated pulse generator (12 volts; 120 mW) incorporating a circuitry shown in FIG 1 was discharged while a pulse current with a pulse width (T neg. in FIG 2) of less than 1 µs was applied with a pulse rate of 10000 pulses per second to the battery. At that time, the value of the pulse current applied to the battery was set to 10 mA.

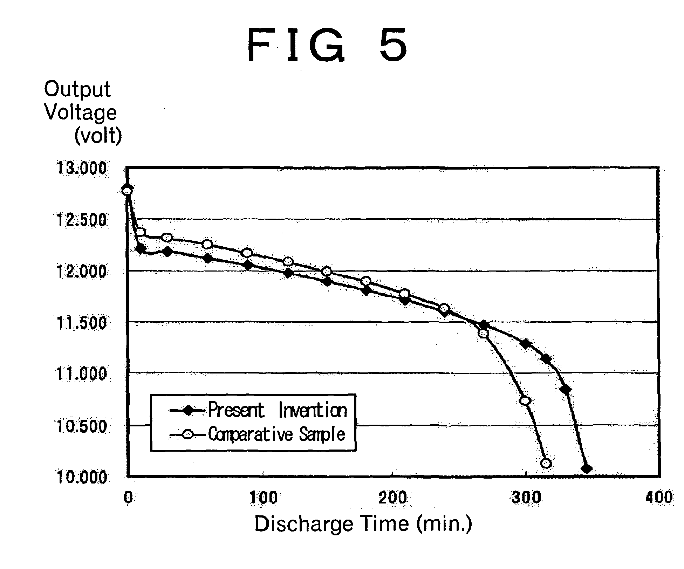

While applying the pulse current to the battery, alteration of the output voltage of the lead-acid battery was measured. In tandem with the measurement of the battery with the device of the invention, the performance of a common battery was measured as a comparative example. The results of measurement are shown in Table 1 and FIG 5.

As is apparent from Table 1 and FIG 5, the lead-acid battery connected to the device of the invention could maintain its output voltage constant over a prolonged period of time in comparison with the comparative example. Furthermore, as shown in Table 2, the lead-acid battery with the device of the invention could be more increased in capacity than the comparative example. As a result, it turned out that the device of the invention contributes to extension of the life of the lead-acid battery.

In observing the interior of the lead-acid batteries discharged in the experiments, there were lead sulfate particles suspended in dilute sulfuric acid solution in the battery of comparative example and slightly deposited on the electrodes. However, growth of lead sulfate on the electrodes occurred rarely in the lead-acid battery using the device of the invention.

**TABLE 1**

| (Unit: Output Voltage (volt)) | | |
|---|---|---|
| DISCHARGE TIME (min.) | BATTERY WITH DEVICE OF THE INVENTION | BATTERY OF COMPARATIVE EXAMPLE |
| 0 | 12.805 | 12.766 |
| 10 | 12.215 | 12.369 |
| 30 | 12.181 | 12.320 |
| 60 | 12.119 | 12.248 |
| 90 | 12.051 | 12.169 |
| 120 | 11.976 | 12.083 |
| 150 | 11.894 | 11.992 |
| 180 | 11.807 | 11.895 |
| 210 | 11.711 | 11.774 |
| 240 | 11.603 | 11.628 |
| 270 | 11.474 | 11.388 |
| 300 | 11.294 | 10.733 |
| 315 | 11.146 | 10.123 |
| 330 | 10.845 | |
| 345 | 10.075 | |
| TOTAL | 5 hr. 45 min. | 5 hr. 15 min. |

**TABLE 2**

| | BATTERY WITH DEVICE OF THE INVENTION | BATTERY OF COMPARATIVE EXAMPLE |
|---|---|---|
| ①AVERAGE VOLTAGE (DCV) | 11.737 | 11.842 |
| ②DISCHARGE TIME (hour) | 5.72 | 5.22 |
| ③LOAD RESISTANCE (Ω) | 2.06 | 2.06 |
| ④AVERAGE DISCHARGE CURRENT (A) (①/③) | 5.7 | 5.7 |
| ⑤ CAPACITY (AH) (④×②) | 32.60 | 29.75 |
| ⑥ 30°C REDUCED CAPACITY (AH) (⑤/0.97) | 33.61 | 30.36 |
| ⑦ SPECIFICATION CAPACITY RATIO OF BATTERY (%) (⑥/28×100) | 120 120 | 108 108 |

### INDUSTRIAL APPLICABILITY

As is apparent from the foregoing disclosure, the device for removing membranous lead sulfate according to the present invention serves to concentrate the electrical charge in the surface layer of the membranous lead sulfate by the conductor skin effect, which is brought about by applying the pulse current with the short pulse width of less than 1 µs to the lead-acid battery. Thus, the device of the invention makes it possible to prevent the lead sulfate deposit on the electrode from exfoliating or falling off in clusters and be resoluble into fine particles from the surface layer part near a boundary face between dilute sulfuric acid and itself.

Accordingly the device of the invention makes it possible to retrieve the performance of a lead-acid battery deteriorated due to the lead sulfate deposit on the electrodes and block recrystallization of lead sulfate, consequently to prevent growth of sulfation, so that the battery life of the lead-acid battery can be prolonged.

Furthermore, since the pulse current applied from the device of the invention is very faint in intensity, no noise is emitted to the outside environment.

## Claims

1. A device for removing membranous lead sulfate deposited on electrodes of a lead-acid battery due to sulfation, comprising a voltage detector, reference voltage generator, voltage comparator, oscillator, amplifier, waveform shaping circuit, negative pulse generator, and electrifying indicator, in which a pulse current having a short pulse width is outputted from said device to bring about a conductor skin effect, thereby to intensively dissolve a surface layer part of said membranous lead sulfate deposit on said electrodes.

2. The device set forth in claim 1, wherein said pulse width is less than 1 µs.

3. The device set forth in claim 1 or 2, wherein said lead-acid battery to which said device is mounted is used as a power source of said device.
